# EUROPEAN PATENT APPLICATION

(11) **EP 4 497 561 A1**
(43) Date of publication of application: **29.01.2025**
(21) Application number: 24151835.6
(22) Date of filing: 15.01.2024
(51) Int. Cl.: B29B 17/04, B02C 19/06, B26F 3/00, B29L 30/00

(54) **APPARATUS FOR RECYCLING TYRES**

(30) Priority: 27.07.2023 GB 202311557
(71) Applicant: Retyre-Tech Limited, London NW1 6EL (GB)
(72) Inventor: JONES, KEN, HAMPSHIRE, RG24 8UX (GB); BANSAL, SHRAVAN, LONDON, NW1 6EL (GB); FLANNERY, JULIAN, DEVON, PL6 6TB (GB)
(74) Representative: Abraham, Richard

(57) **Abstract**

Apparatus and method for removing rubber from tyres. The apparatus comprises a main housing in which is supported a water jet nozzle assembly, a guide mechanism and a collection chamber. The guiding mechanism directs flattened tyre parts under the nozzle assembly in a manner that is substantially perpendicular to the nozzle assembly. The nozzle assembly includes at least one nozzle to direct high-pressure water onto the tyre part, to thereby remove the rubber. The rubber is captured and delivered into the collection chamber.

## Description

### FIELD OF THE INVENTION

The present invention relates to a recycling apparatus forming part of a method of recycling of car tyres, and separates the rubber, fibrous, and metal components of a tyre. More especially, the invention relates to a tyre recycling unit that allows the processing of tyres and the separation of rubber crumb by particle size.

### BACKGROUND TO THE INVENTION

The applicant has developed a tyre recycling technology that uses ultra-high-pressure water (UHPW) to remove rubber from the steel latus of vehicle tyres. In use, the water jet breaks down the rubber components and fibrous material into pieces, which are readily separated from the metal components.

The principle of the recycling process is described in the applicant's earlier patent GB2607860.

This operation uses water at a pressure of around 40,000 PSI to process a vehicle tyre in approximately 30 seconds.

An important aspect of rubber recycling is the yield and consistency of separated materials, particularly with respect to differing rubber grades and rubber crumb particle sizes.

Generally, tyres are formed of different grades of rubber which are used for different parts of the tyre. For example, the highest quality of rubber is used in the tread portion to provide grip. To separate grades of rubber, tyres are cut into respective segments prior to processing.

Cut tyre portions are not of equal dimension with respect to width, length or general shape. Known processes with fixed positioned water jets therefore must accommodate an area great enough to ensure the entire tyre portion is pulverized. However, inefficiencies in the area covered and loss of rubber crumb yield can occur about the external perimeters of a tyre portion.

Rubber crumb particle size is dependent on several factors, such as water pressure, location of water jets, contact time between tyre portions and water jet and dissipation of kinetic energy transferred from said water jet with respect to the tyre portion (oscillation of the tyre portion).

Known systems control the aforementioned factors of water pressure and the location of water jets. They do not provide, however, a method of further narrowing the particle size distribution of rubber crumb, especially with respect to vibration control, variable location of water jets and the contact time between the water jet and tyre portion.

The present invention seeks to provide a tyre recycling unit that can efficiently separate tyre component materials. Specifically, the present invention provides an apparatus and method of producing consistent high yield batches of rubber crumb, with respect to particle size and rubber grade.

The present further provides a mobile tyre recycling unit that can be transported on constructed on site.

### STATEMENTS OF INVENTION

According to a first aspect of the invention, there is provided, apparatus for removing rubber from tyres, the apparatus comprising a main housing in which is supported a water jet nozzle assembly, a guide mechanism and a collection chamber, the guiding mechanism providing a means for directing at least a section of flattened tyre part under the nozzle assembly in a manner that is substantially perpendicular to the nozzle assembly, the nozzle assembly including at least one nozzle to direct high-pressure water onto the tyre part, to thereby remove the rubber, wherein the rubber is captured and delivered into the collection chamber.

Preferably the housing is constructed from upper and lower box sections, the nozzle assembly being supported above the guide mechanism in the top section and an entrance to the collection chamber being located directly under the nozzle assembly in the lower section.

Preferably, the guide mechanism includes an array of rollers.

Preferably, the roller array consists of a plurality of rollers of a first diameter, each divided by a roller of a second diameter, smaller than the first diameter.

Preferably, the roller array is supported by roller plates, each connected to a respective side arched plate.

Preferably, at least one dividing rod extends between the side arched plates above the roller array.

Preferably, the rollers are rotated by a drive wheel located under the guide mechanism within the housing.

Preferably, the rollers and roller plates are separated laterally to provide a gap in which the nozzle assembly us supported.

Preferably, the nozzle assembly includes a nozzle support plate having a lengthwise slot, and a nozzle carrier which extends through the slot.

Preferably, the nozzle carrier is secured to a slide block located under the support plate to allowing slidable movement of the nozzle carrier within the slot.

Preferably, the slide block is driven by a servometer attached to the housing.

Preferably, the bottom end of the nozzle carrier has at least one nozzle to direct high-pressure water on to a tyre part guided through the guide mechanism under the nozzle carrier.

Preferably, a shoe is supported on the underside of the slide block to impart a compressive force to the tyre part as it is guided underneath the nozzle assembly.

Preferably, the shoe has a central aperture through which the water is directed from the nozzle.

Preferably, multidirectional rollers are provided on the underside of the shoe.

Preferably, the collection container is a hopper.

Preferably, the apparatus further comprises an exit chute or funnel to remove processed tyre parts from then housing.

A method of processing tyres to remove and collect rubber is also described. The method comprising the steps of: separating sidewalls from the tyre; cutting the resulting tyre part to allow it to be laid flat; feeding the tyre part into the guide mechanism of the apparatus described; controlling movement of the nozzle assembly and/or speed of the drive wheel to pulverise the rubber in a defined manner; collecting the rubber in the collection chamber; and collecting the remaining tyre part with the rubber removed.

The method may also include the step of transporting the rubber to an industrial sieve to separate the rubber into various size profiles.

### BRIEF DESCRIPTION OF THE DRAWINGS

The invention will now be described, by way of example only, with reference to the accompanying drawings in which:
Figure 1 is a mobile tyre recycling unit constructed in accordance with the invention, with the outer panels removed to show internal features;
Figure 2 is a side view of the unit of figure 1;

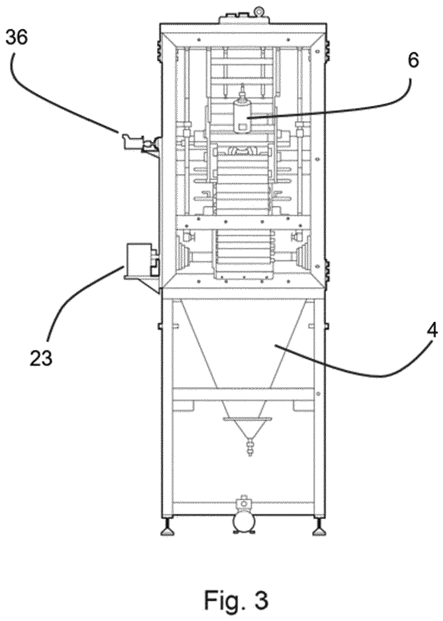

Figure 3 is an end view of the unit of figure 1;
Figure 4 is a perspective view of the guide mechanism of the unit;

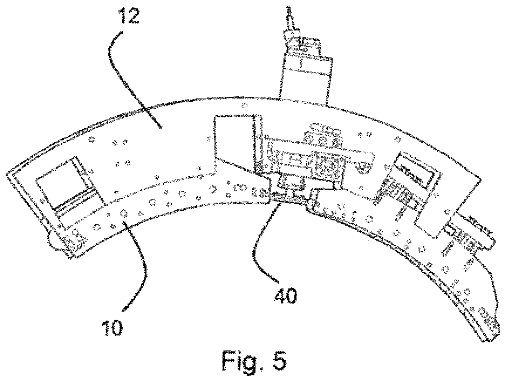

Figure 5 is a side view of the guide mechanism;
Figure 6 is a view of the underside of a guide plate forming part of the guiding mechanism of figure 4; and

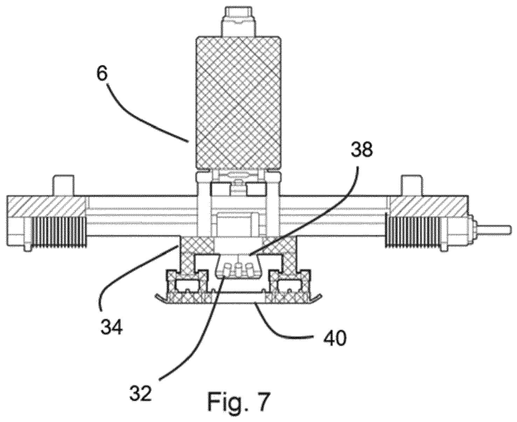

Figure 7 is a side cross-section view the guide plate.

### DETAILED DESCRIPTION OF THE INVENTION

The present invention describes a tyre processing unit which forms the main part of a tyre recycling process.

The unit and processes hereinafter described may be equally applicable to other flexible end of life materials such as, for example and without limitation, carbon fibre sheets.

The overall process is summarised as follows:
Firstly, feed material is created though a preliminary but separate process. This process involves preparing the raw material (in the present description being tyres) by separating (cutting) the sidewalls from the tyre and providing a single cut through the tread so that the tyre parts can be laid flat. Once flat, the tyre parts can be fed into the processing unit.

The tyre parts are then processed in the processing unit in a way that will be later described; during which time the rubber is pulverised and separated from the steel mesh.

Once the processing step has been completed the rubber-free, clean, steel is directed away from the processing unit to a collection container, by means of a chute, funnel or other delivery system.

The pulverised rubber and associated water is collected in a hopper before being transferred to an industrial sieve, for example one provided by Russel Finex^{™}. The sieving process sorts the pulverised rubber pieces, crumb and powder into particulate sizes and filters out the water for recovery and re-circulation.

The main processing unit will now be described with reference to the figures.

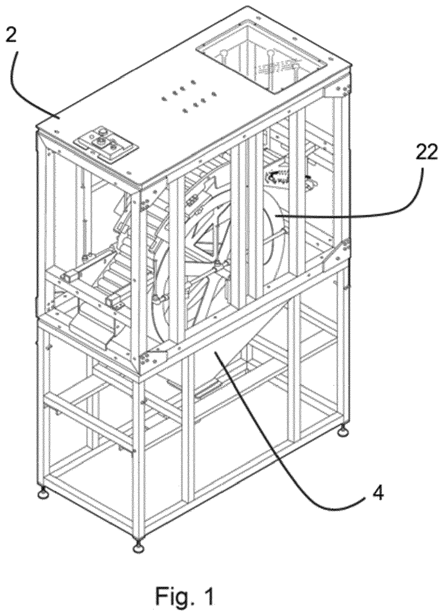

Figure 1 shows the processing unit with the outer panels removed for the purpose of describing the internal features.

The unit is a stand-alone piece of machinery allowing for it to be fairly portable and suitable for transportation to a desired location.

The unit comprises a housing 2 of an outer framework consisting of connected horizontal and vertical struts, which houses a guide mechanism to feed tyres into and through the processing unit, and a hopper 4 to collect pulverised rubber produced by the process.

The framework is formed generally with upper and lower box sections, made from stainless steel or other suitable material suitable for outside industrial environments. Panelling (not shown) is provided around the top section to protect the working components from the outside environment.

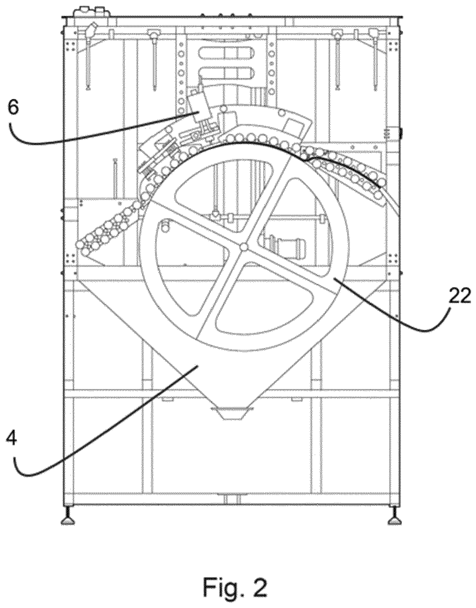

The guide mechanism and hopper 4 are more clearly shown in figure 2. Both are held above the ground generally centrally within the housing 2. A jet nozzle assembly 6 is held within the housing 2 above the guide mechanism to direct an ultra-high-pressure jet of water downwardly onto the tyre or tyre part being fed through the guiding mechanism, in order to pulverize the rubber on the tyre.

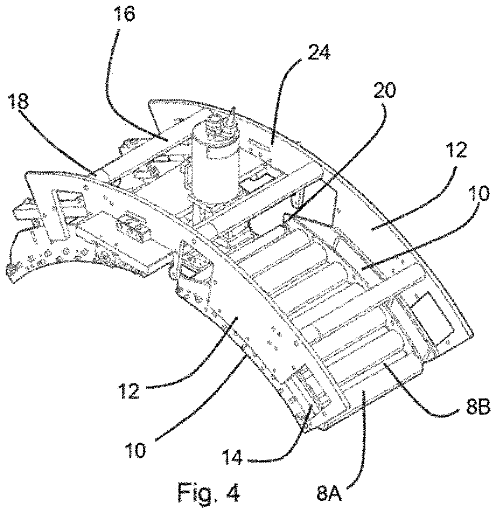

As can be seen from figure 4, the guide mechanism includes an array of rollers 8 supported by roller plates 10 each connected to respective side arch plates 12. The roller array 8 consists of a plurality of rollers 8A typically of a diameter of 50mm, each divided by rollers 8B of smaller diameter, typically 20mm. This minimizes the risk of the tyre part being caught in any gap between the rollers 8 causing a blockage in the guiding mechanism.

Each side arch plate12 is separated from raised sides of the roller plate 10 by a spacer 14. Dividing rods 16 are connected to, and extend between, the side plates 12 above the rollers 8 at a sufficient height so not to hinder tyre parts being fed through the guiding mechanism underneath. The rods 16 prevent the tyres lifting off the rollers 8 and getting caught within the guide mechanism causing a blockage. The dividing rods 16 are extendible using extension members 18 to allow variable width to accommodate wider tyre parts being fed through guiding mechanism.

Spacers 20 are provided between the ends of rollers 8 and the roller plates 10 to ensure that the rollers 8 remain free to rotate.

The rollers 8 are rotated by a drive wheel 22 made from stainless steel or other appropriate material, driven by a drive motor 23 and gearbox. The width of the drive wheel 22 provides a surface to support and hold the tyre parts in place whilst they move through the guiding mechanism. The surface of the drive wheel 22 may be flexible.

The roller plates 10 and rollers 8 are divided laterally into curved sections 10A, 10B, forming together the overall arched structure. The sections 10A, 10B are separated to provide a gap in which the jet nozzle assembly 6 can locate. The side plates 12 are not separated and extend across the gap and provide side walls 24 between which a nozzle support plate 26 is supported.

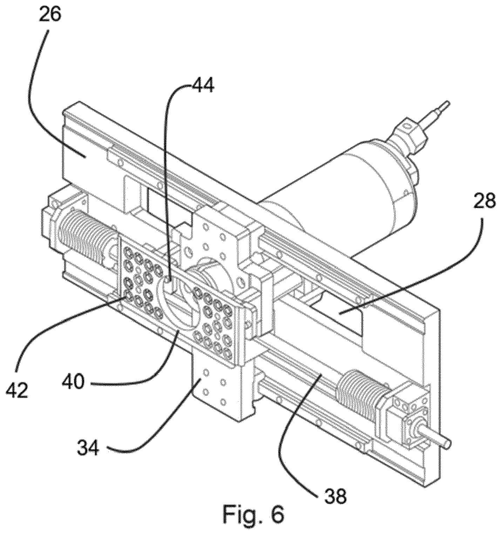

The nozzle plate 26 is generally flat and has a through slot 28 extending lengthwise in a side part of the plate 26 (see figure 6). The nozzle assembly 6 is held on a nozzle carrier 30 which extends downwardly through the slot 28.

During use, ultra-high pressure water is delivered from a pump to an electrically or other suitably drive rotating carrier head which spins the nozzle carrier 30. The bottom end of the carrier 30 includes one more nozzles 32 directed downwardly to pulverise the tyre parts as they move through the guide mechanism.

As shown in figure 6, the bottom end of the carrier 30 is secured to a slide block 34, under the support plate 26. The slide block 34 is linked to a servomotor 36 via a drive rod 38 to move the nozzle assembly 6 within and along the slot 28 in a perpendicular manner across the width of the tyre part below to ensure the complete granulation, crumbing or pulverization of all the rubber associated with the tyre parts. The servomotor 36 allows adjustability of speed and the coverage (distance) of the width of the tyre part.

The servometer 36 is interfaced with programmable logic controller with a human-machine interface for operation.

A frame extends downwardly from the slide block 34, at the end of which is supported a slipper shoe 40 orientated parallel to the slide block 34 and that imparts a uniform compressing force against the tyre parts to retain them flat against the drive wheel 22.

Multi-directional rollers 42 are located on the undersurface of the shoe 40, which engage the tyre parts, to allow the tyre parts to pass under the nozzles 32 perpendicular to the nozzle carrier 28.

The shoe 40 has a central aperture 44 of sufficient diameter to accommodate the nozzle head above.

The shoe 40, slide block 34 and support plate 26 are configured to have a low coefficient of friction at their interfaces with the tyre portion. The low coefficient of friction prevents sticking or binding of the tyre parts to the apparatus.

The shoe 40 and nozzles 32 can traverse the tyre parts at a variable speed which allows control of contact time between the water jet and tyre portion, therefore controlling the particle size of the resultant rubber crumb.

In use, the nozzle carrier head containing the nozzles 32 moves back and forth in a perpendicular manner across the width of the tyre part to ensure the complete granulation, crumbing or pulverization of all the rubber associated with the tyre parts.

Using high pressure water, rubber is removed from the tyre and is pulverised into rubber crumb of different sizes, leaving the metal mesh of the tyre as a separate byproduct.

The system is designed to process tyres in high volumes and requires the sidewalls of the tyre to be removed prior to use. Tyres are cut into portions to separate differing rubber grades of the tyre and so that the tyre portions can be laid flat and fed into the system.

The cut tyre portion is fed in one end of the machine manually, where it engages with the drive wheel 22 to be manoeuvred towards and under the nozzles 32. The stripped tyre/wire mesh is then fed out of the unit through an outfeed exit chute or funnel.

The rubber product is collected in a hopper 4 in a bottom part of the housing 2 directly under the nozzle assembly 6. Thereafter the rubber product is and pumped, with water, to an industrial sieve that separates the rubber crumb into different particle sizes for recycling.

The rate and removal of rubber and/or the size distribution of rubber crumb, granulate or powder can be selected or optimised in a number of ways.

Varying the speed of the drive wheel 22 to allow the process to run at different rates depending on the tread width and thickness. The speed of the drive wheel 22 will also impact how much material is removed from the tyre pieces; a slower speed removing more material and vice versa.

Similarly, varying speed of the sliding block 34 traversing across the width of the tyre will impact how much material is removed from the tyre part in the same way.

The rate of removal of rubber will also be impacted by varying the distance between the jet nozzles 32 and the surface of the tyre part, varying the the orifice size, angle and quantity of nozzles, or varying the pressure and/or flow rate of the ultra-high pressure water jet.

It will be appreciated that the forgoing is merely exemplary of a separating method and apparatus in accordance with the invention and that modification can readily be made thereto without departing from the true scope of the invention as set out in the aforesaid description.

## Claims

1. Apparatus for removing rubber from tyres, the apparatus comprising a main housing in which is supported a water jet nozzle assembly, a guide mechanism and a collection chamber, the guiding mechanism providing a means for directing at least a section of flattened tyre part under the nozzle assembly in a manner that is substantially perpendicular to the nozzle assembly, the nozzle assembly including at least one nozzle to direct high-pressure water onto the tyre part, to thereby remove the rubber, wherein the rubber is captured and delivered into the collection chamber.

2. Apparatus according to claim 1, wherein the housing is constructed from upper and lower box sections, the nozzle assembly being supported above the guide mechanism in the top section and an entrance to the collection chamber being located directly under the nozzle assembly in the lower section.

3. Apparatus according to claim 1 or claim 2, wherein the guide mechanism includes an array of rollers.

4. Apparatus according to claim 3, therein the roller array consists of a plurality of rollers of a first diameter, each divided by a roller of a second diameter, smaller than the first diameter.

5. Apparatus according to claim 3 or claim 4, wherein the roller array is supported by roller plates, each connected to a respective side arched plate.

6. Apparatus according to claim 5, wherein at least one dividing rod extends between the side arched plates above the roller array.

7. Apparatus according to any one of claims 3 to 6, wherein the rollers are rotated by a drive wheel located under the guide mechanism within the housing.

8. Apparatus according to any one of claims 3 to 7, wherein the rollers and roller plates are separated laterally to provide a gap in which the nozzle assembly us supported.

9. Apparatus according to any preceding claim, wherein the nozzle assembly includes a nozzle support plate having a lengthwise slot, and a nozzle carrier which extends through the slot.

10. Apparatus according to claim 9, wherein the nozzle carrier is secured to a slide block located under the support plate to allowing slidable movement of the nozzle carrier within the slot.

11. Apparatus according to claim 10, wherein the slide block is driven by a servometer attached to the housing.

12. Apparatus according to any one of claims 9 to 11, wherein the bottom end of the nozzle carrier has at least one nozzle to direct high-pressure water on to a tyre part guided through the guide mechanism under the nozzle carrier.

13. Apparatus according to any one of claims 10 to 12, wherein a shoe is supported on the underside of the slide block to impart a compressive force to the tyre part as it is guided underneath the nozzle assembly.

14. Apparatus according to claim 13, wherein the shoe has a central aperture through which the water is directed from the nozzle.

15. Apparatus according to claim 13 or claim 14, wherein multidirectional rollers are provided on the underside of the shoe.
